Europäisches Patentamt

European Patent Office

Office européen des brevets

(11) Publication number: **0 117 446**
**B1**

# (12) EUROPEAN PATENT SPECIFICATION

(45) Date of publication of patent specification: **19.11.87**

(51) Int. Cl.⁴: **C 03 C 17/25, C 03 C 17/27**

(21) Application number: **84100903.8**

(22) Date of filing: **28.01.84**

(54) Pyrolytic deposition of metal oxide film from aqueous suspension.

(30) Priority: **02.02.83 US 463194**
**02.02.83 US 463195**

(43) Date of publication of application:
**05.09.84 Bulletin 84/36**

(45) Publication of the grant of the patent:
**19.11.87 Bulletin 87/47**

(84) Designated Contracting States:
**BE DE FR GB IT NL**

(56) References cited:
**US-A-3 004 863**
**US-A-3 378 390**
**US-A-4 308 319**

(73) Proprietor: **PPG INDUSTRIES, INC.**
**One PPG Place**
**Pittsburgh Pennsylvania 15272 (US)**

(72) Inventor: **Greenberg, Charles Bernard**
**3268 Windgate Drive**
**Murrysville, PA 15668 (US)**
Inventor: **Henery, Vern Allan**
**3280 Cassius Street**
**Pittsburgh, PA 15235 (US)**

(74) Representative: **Sternagel, Hans-Günther, Dr.**
**et al**
**Patentanwälte Dr. Michael Hann Dr. H.-G.**
**Sternagel Sander Aue 30**
**D-5060 Bergisch Gladbach 2 (DE)**

Courier Press, Leamington Spa, England.

# Description

The present invention relates to the pyrolytic deposition of metal oxide films from aqueous compositions of coating reactants.

The pyrolytic deposition of metal oxide films onto a glass surface is described in U.S.—A—3,660,061 to Donley et al. Organometallic salts, preferably acetylacetonates, are dissolved in an organic vehicle such as methylene chloride. Other suitable solvents include aliphatic and olefinic halocarbons, halogenated hydrocarbons, alcohols, and nonpolar aromatic compounds such as benzene and toluene. The organic solution is sprayed onto a hot glass surface where it thermally decomposes to form a metal oxide film which alters the reflectance and transmittance of solar energy by the glass.

Current interest in eliminating the health and environmental hazards of using large volumes of organic solvents has encouraged the development of aqueous coating compositions. It is known from U.S.—A—2,688,565 to Raymond that light reflecting coatings of cobalt oxide may be deposited by contacting a hot glass surface with an aqueous solution of cobalt acetate. However, such films have a grainy, irregular texture and are highly porous, resulting in poor acid resistance evidenced by debonding of the film.

U.S.—A—4,308,319 to Michelotti et al. discloses the pyrolytic deposition of a durable, uniform, solar energy reflecting spinel-type film from an aqueous solution of a water soluble cobalt salt and a water soluble tin compound.

US—A—3,378,390 discloses a method of and compositions for applying colour to glass.

The colouring compositions comprise an aqueous solution of a cobalt salt or a paste wherein the concentration of the cobalt is higher.

The object of the present invention is on the one hand to eliminate the costs and hazards (health and environmental hazards) of organic solvents used in the pyrolytic deposition of metal oxide films on a glass substrate from organic coating solutions, and on the other hand to obviate the difficulties arising when the organic solvents are replaced by water, because of the low solubility of coating reactants, such as organometallic coating reactants, in water.

This object is solved by a method for depositing a metal oxide containing film on a glass substrate by contacting a surface of the substrate with an aqueous coating composition containing a metal coating reactant at a temperature sufficient to thermally react the coating reactant to form a metal oxide on said substrate surface, characterized by dispersing water insoluble coating reactant into aqueous medium by vigorous and continuous mixing to physically suspend said reactant in said aqueous medium to form an aqueous suspension as coating composition or by chemically suspending water insoluble ultrafine powder coating reactants in an aqueous medium by the use of a chemical wetting agent to form an aqueous suspension as coating composition.

The present invention provides a pyrolytic deposition of light and heat reflective metal oxide films having similar spectral, physical and chemical properties in comparison with films pyrolytically deposited from organic solutions. Organometallic coating reactants typically used in organic solutions are physically suspended in an aqueous medium by means of vigorous and continuous mixing. The organometallic coating reactants physically suspended in an aqueous medium are pyrolytically deposited to form metal oxide films on a hot glass substrate using conventional spray equipment and under temperature and atmosphere conditions generally encountered in pyrolytic coating operations. Alternatively, films in accordance with the present invention are pyrolytically deposited from an aqueous suspension wherein organometallic coating reactants typically used in organic solutions are chemically suspended in an aqueous medium by use of a chemical wetting agent in combination with extremely fine powder reactants. The organometallic coating reactants chemically suspended in an aqueous medium are pyrolytically deposited to form metal oxide films on a hot glass substrate using conventional spray equipment, and under temperature and atmosphere conditions generally encountered in pyrolytic coating operations. As a result, commercially acceptable metal oxide films comparable to those currently deposited from organic solutions can now be produced using the same coating facilities while eliminating the costs and hazards of organic solvents by employing aqueous suspensions.

## Description of the Drawing

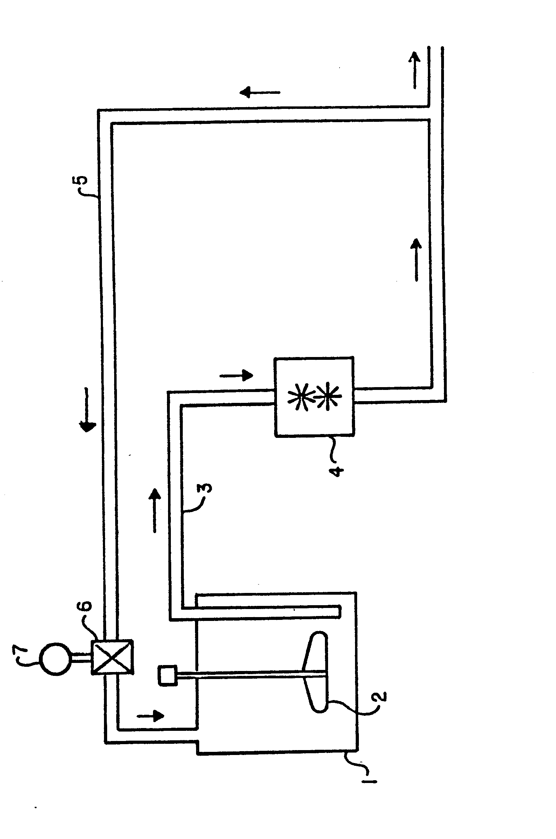

Figure 1 illustrates a mix tank 1 equipped with a stirrer 2 which agitates the aqueous medium to maintain organometallic coating reactants in suspension. The aqueous suspension is conveyed by conduit 3 through a gear pump 4 which ensures uniform flow of the suspended reactant en route to spray guns (not shown). A recirculation loop 5 equipped with a valve 6 and pressure gauge 7 carries aqueous suspension not delivered to the spray guns back to the mix tank 1 for continuous mixing.

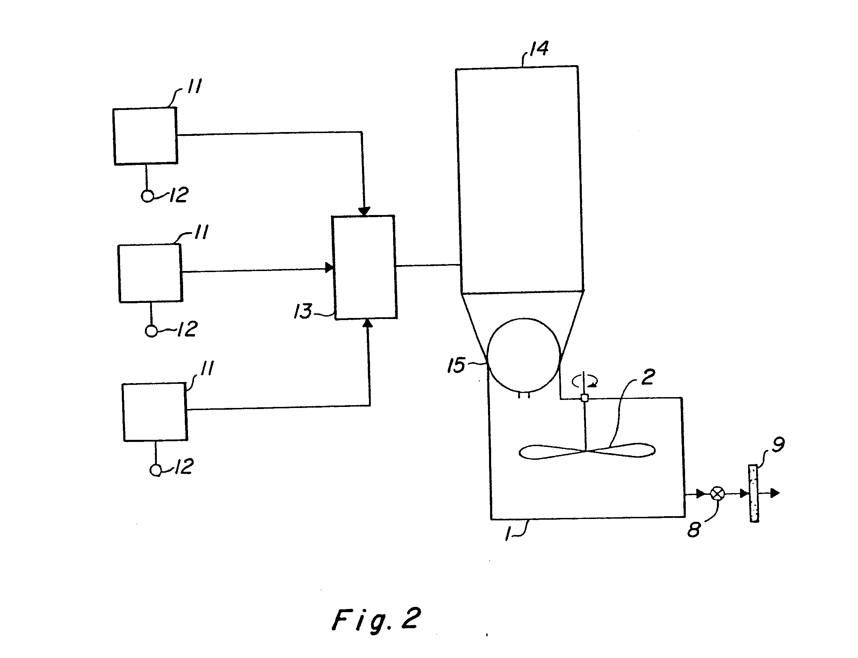

Figure 2 illustrates hoppers 11 equipped with scales 12 which feed powdered coating reactants into a jet mill 13 which pulverizes the coating reactants to ultrafine powder which is conveyed to a baghouse 14 and delivered through an air lock 15 into a mixing tank 1 equipped with a stirrer 2 which gently stirs the aqueous suspension. The aqueous suspension is delivered by pump 8 through a filter 9 which removes impurities or undispersed coating reactant en route to spray guns (not shown).

## Description of the Preferred Embodiments

While interest in eliminating the health and environmental hazards, as well as the cost, of organic solvents in pyrolytic coating processes has encouraged the use of aqueous coating solutions, many coating reactants, particularly organometallic coating reactants, have such low solubility limits in water that commercial pyrolytic deposition has not been feasible. For example the acetylacetonates disclosed in U.S.—A—3,660,061 for pyrolytic deposition of metal oxide films on glass produce high quality, high performance coated products. However, their solubilities in water are relatively low; at 30°C only 0.3% for cobaltic acetylacetonate and only 0.15% for chromic acetylacetonate. At such concentrations, very large volumes of aqueous solutions would be required, resulting in prohibitive cooling of the glass as well as unacceptably slow film formation rates.

In accordance with the present invention, relatively water-insoluble coating reactants, such as acetylacetonates, are physically suspended in an aqueous medium by continuous mixing. Alternatively, such reactants are chemically suspended in an aqueous medium by utilizing very fine micronsized particles of coating reactants in combination with a chemical wetting agent. Thereby, concentrations as high or higher than those obtainable in organic solvents may be achieved in an aqueous suspension. The resulting aqueous suspension may be applied by conventional means, typically spraying, to a substrate to be coated, particularly a hot glass surface, preferably a float glass ribbon.

Although acetylacetonates are the preferred coating reactants in accordance with the present invention, various other organometallic coating reactants may also be employed, as well as relatively water-insoluble compounds in general. The principle of physically or chemically suspending a relatively insoluble coating reactant in an aqueous medium has wide applicability in the field of pyrolytic deposition of metal oxide films.

In preferred embodiments of the present invention, relatively water-insoluble coating reactants are obtained in solid, powder form. The powder is milled to a uniform, flour-like consistency. Preferably, the particle size of the powder is small enough to pass through a 0.044 mm screen. In typical coating processes, when a mixture of metal oxides is desired in the film, organometallic coating reactants are first mixed together in the desired proportions, and then physically suspended in the aqueous medium.

The aqueous medium is typically just water. However, the vigorous mixing required to maintain the coating reactants in suspension may generate foaming. For this reason an anti-foaming agent may be useful. Conventional, commercially available defoamers, particularly silicone based products such as those available from Dow Corning, are suitable. If a defoamer is used, it is added to the water prior to addition of the coating reactant. A surfactant may also be beneficial in reducing foaming. Depending on the particular spray equipment to be used, a thickening agent such as polyethylene glycol may be added to the aqueous suspension to increase the viscosity of the suspension and improve the texture of the resultant coating. However, the essential feature of the present invention involves the use of coating reactants physically suspended in an aqueous medium, and not the various additives which are optional.

In a preferred embodiment of the present invention, a mixture of metal acetylacetonates is blended, milled, sifted through a 0.044 mm screen and added with vigorous agitation to water which contains a small amount of a silicone anti-foaming agent. An aqueous suspension is physically formed and maintained by continuous mixing. (If mixing is discontinued, the coating reactants will settle out overnight.) The aqueous suspension is continuously circulated by means of a gear pump, which also provides continuous milling of the suspension to maintain uniformity, and is delivered by means of conventional pyrolytic spray equipment to the surface of a hot float glass ribbon. The coating reactants pyrolyze to form a metal oxide film having similar spectral, physical and chemical properties to a film formed by pyrolysis of the same coating reactants in an organic solution.

In other preferred embodiments of the present invention, relatively water-insoluble coating reactants are obtained in solid, powder form. The powder is jet milled to a uniform, fine powder having particles typically less than 10 µm, preferably from about 2 to 5 µm, in diameter. In typical coating processes, when a mixture of metal oxides is desired in the film, organometallic coating reactants are first mixed together in the desired proportions, jet milled to obtain the desired particle size, and then added to the aqueous medium which contains a chemical wetting agent in order to form a chemical suspension.

The aqueous medium is preferably distilled or deionized water. However, if a more viscous medium is desired, a mixture of water and glycerol or other water-miscible organic thickener, may be used. The aqueous medium further comprises a wetting agent which acts to disperse, deaerate and suspend the ultrafine coating reactant particles. Various wetting agents, including anionic, nonionic and cationic compositions, are suitable, in amounts which are determined empirically depending on the wetting agent, the coating reactants and their concentrations, and the aqueous medium. The essential feature of the present invention involves the use of a wetting agent in combination with ultrafine particles of coating reactant to form a chemical suspension in an aqueous medium. The wetting agent displaces air entrained in the powder, and promotes dispersion and suspension of the powder particles by wetting their surfaces. Without the chemical wetting agent, the ultrafine particles would float on the surface of the aqueous medium.

In a most preferred embodiment of the present invention, a mixture of metal acetylacetonates is blended, jet milled to a particle size less than 10 µm, and added with stirring to water which contains a wetting agent. An aqueous suspension is formed which is a true chemical suspension as evidenced by the fact that after storage for more than 3 months with no stirring or mixing, very little separation or settling of the coating reactants from the aqueous suspension has occurred. The aqueous suspension is delivered by means of conventional pyrolytic spray equipment to the surface of a hot float glass ribbon. The coating reactants pyrolyze to form a metal oxide film having similar spectral, physical and chemical properties to a film formed by pyrolysis of the same coating reactants in an organic solution. Moreover, films pyrolytically deposited from aqueous suspensions in accordance with the present invention exhibit faster growth rates than the growth rates measured for films pyrolytically deposited from organic solutions, typically about one third faster. This faster growth rate enables the deposition of acceptable films at faster line speeds.

The present invention will be further understood from the descriptions of specific examples which follow.

Example I

An aqueous suspension is prepared by blending 400 grams of cobaltic acetylacetonate, 116 grams of ferric acetylacetonate and 136 grams of chromic acetylacetonate, and adding the mixture with vigorous agitation to 4 liters of water. The aqueous suspension thus formed is continuously mixed and recirculated as illustrated in Figure 1 using a Teel gear pump, and is ultimately delivered by means of spray guns to the surface of a glass sheet which is at a temperature of about 593.5°C. The organometallic coating reactants pyrolyze to form a mixed metal oxide film comparable to the films formed from organic solutions of the same reactants as taught in U.S.—A—3,660,061.

Example II

An aqueous suspension is prepared by blending 180 grams of chromic acetylacetonate, 133 grams of cobaltic acetylacetonate and 133 grams of ferric acetylacetonate, and adding the mixture with vigorous agitation to 3 liters of water. The aqueous suspension thus formed is continuously mixed and recirculated, and finally delivered to a hot glass surface as in Example I. A light and heat reflective metal oxide film is formed.

Example III

An aqueous suspension is prepared by blending 336 grams of iron acetylacetonate with 114 grams of nickel acetylacetonate and adding the mixture with vigorous agitation to 3 liters of water. The aqueous suspension thus formed is continuously mixed and recirculated as in the previous examples, and applied to a hot glass substrate to pyrolytically deposit a uniform film.

Example IV

An aqueous suspension is prepared by blending 100 grams of cobaltic acetylacetonate, 29 grams of ferric acetylacetonate and 34 grams of chromic acetylacetonate, and adding the mixture with vigorous agitation to 250 milliliters of water. To reduce foaming, the water contains 3 grams of AEROSOL® RT 70%, a silicone-based anti-foaming agent available from American Cyanamid. The aqueous suspension is continuously mixed and recirculated as in the previous examples, and delivered by spray gun to a hot glass surface. A metal oxide film is formed which shows no deleterious effects from the presence of the anti-foaming agent.

Example V

An aqueous suspension is prepared by blending 117.7 grams of cobaltic acetylacetonate, 30.2 grams of ferric acetylacetonate and 41.0 grams of chromic acetylacetonate per liter of suspension, jet milling the powders to an average particle size less than about 10 μm, and adding the mixture to water containing 0.3 percent by volume of a nonionic wetting agent which comprises propylene oxide polymer and propylene glycol initiator. Such a wetting agent is available as Pluronic® L-31 from BASF Wyandotte Corporation. The aqueous suspension thus formed is pumped through a filter as shown in Figure 2, and delivered by means of spray guns to the surface of a glass sheet which is at a temperature of about 593.5°C. The organometallic coating reactants pyrolyze to form a mixed metal oxide film comparable in spectral, physical and chemical properties to the films formed from organic solutions of the same reactants as taught in U.S.—A—3,660,061. Such comparable films are formed at a growth rate about 33 percent faster than the rate of film formation experienced with organic coating solutions.

Example VI

During a coating process as described in Example I, exhausted material is recovered in a reclamation baghouse, similar to the collection baghouse illustrated in Figure 2. The metal acetylacetonates are recovered by solution in methylene chloride. The dried powder is again jet milled for an average particle size less than about 10 μm. Specific metal acetylacetonates are added as needed to establish the proportions in Example I. The reconstituted powder is chemically suspended in an aqueous medium containing wetting agent and delivered to a hot glass substrate as in the previous Example, resulting in a coating with substantially identical properties, indicating that recovery and reuse of the reactants are commercially feasible.

Example VII

A dry powder mixture of 117.7 grams per liter of suspension cobaltic acetylacetonate, 30.2 grams per liter ferric acetylacetonate and 41.0 grams per liter chromic acetylacetonate is jet milled to an average particle size of about 10 μm or less, and dispersed in an aqueous medium comprising 60 percent by volume water and 40 percent by volume glycerol, which contains 0.3 percent (of combined volume) Pluronic® L-31 wetting agent.

The aqueous suspension is sprayed on the surface of a hot glass substrate, and forms a durable film of excellent quality at a film growth rate comparable to that of organic coating solutions.

Example VIII

A mixture of acetylacetonates is milled and suspended as in the previous examples. The aqueous medium comprises 60 percent by volume water and 40 percent glycerol. The aqueous suspension medium further comprises 0.3 percent (based on total volume of the water and glycerol) of a nonionic alkaryl polyether alcohol available as Triton® X-100 from Rohm and Haas. The aqueous suspension is sprayed on a hot glass surface as in the previous examples to form a durable metal oxide film.

The above examples are offered to illustrate the present invention. Various other coating reactants, wetting agents, concentrations, additives, substrates, and temperatures may be used to form a wide variety of coatings from aqueous suspensions. For example, other suitable wetting agents include nonionic polypropylene oxide compositions; 1,1,4,4-tetraalkyl-2-butyne-1,4 diol; and anionic lauryl sulfate compositions at various concentrations.

List of Reference Numbers
    1 mix tank
    2 stirrer
    3 conduit
    4 gear pump
    5 recirculation loop
    6 valve
    7 pressure gauge
    8 pump
    9 filter
    10
    11 hoppers
    12 scales
    13 jet mill
    14 bag house
    15 air lock

**Claims**

1. A method for depositing a metal oxide film on a glass substrate by contacting a surface of the substrate with an aqueous coating composition containing a metal coating reactant at a temperature sufficient to thermally react the coating reactant to form a metal oxide on said substrate surface, characterized by dispersing water insoluble coating reactant into aqueous medium by vigorous and continuous mixing to physically suspend said reactant in said aqueous medium to form an aqueous suspension as coating composition.

2. A method for depositing a metal oxide film on a glass substrate by contacting a surface of the substrate with an aqueous coating composition containing a metal coating reactant at a temperature sufficient to thermally react the coating reactant to form a metal oxide on said substrate surface, characterized by chemically suspending water insoluble ultrafine powder coating reactants in an aqueous medium by the use of a chemical wetting agent to form an aqueous suspension as coating composition.

3. The method of claims 1 or 2, wherein said coating reactant is an organo-metallic composition.

4. The method of claim 3, wherein said coating reactant is a metal acetyl acetonate.

5. The method of claim 4, wherein said metal acetyl acetonate is a mixture of cobalt, iron, and chromium acetyl acetonates.

6. The method according to any one of claims 1 to 5, wherein the coating composition further comprises an anti-foaming agent.

7. The method according to claim 6, wherein the anti-foaming agent is a silicone based composition.

8. The method according to any one of claims 1 to 7, wherein the coating composition further comprises a water-miscible solvent to increase the viscosity of the aqueous medium.

9. The method of claim 8, wherein the water-miscible solvent is glycerol.

10. The method of claim 2, wherein the wetting agent in the coating composition is 1,1,4,4-tetraalkyl-2-butyne-1,4 diol.

11. The method of claim 2, wherein the wetting agent in the coating composition is an anionic lauryl sulfate compound.

12. The method of claim 2, wherein the wetting agent in the coating composition is a nonionic polypropylene oxide composition.

**Patentansprüche**

1. Verfahren zum Ablagern eines Metalloxidfilmes auf einem Glasträger durch in Berührung bringen einer Oberfläche des Trägers mit einer wässerigen, ein metallisches Beschichtungsmittel enthaltenden Beschichtungszusammensetzung bei einer Temperatur, die für thermische Umwandlung des Beschichtungsmittels und Bilden eines Metalloxids auf der Trägeroberfläche ausreicht, dadurch gekennzeichnet, daß man ein wasserunlösliches Beschichtungsmittel durch intensives und ständiges Mischen in wässerigem Medium dispergiert, um das Mittel in dem wässerigen Medium physikalisch zu suspendieren und eine wässerige Beschichtungszusammensetzung ausbildet.

2. Verfahren zum Ablagern eines Metalloxidfilmes auf einem Glasträger durch in Berührung bringen einer Oberfläche des Trägers mit einer wässerigen, ein metallisches Beschichtungsmittel enthaltenden Beschichtungszusammensetzung bei einer Temperatur, die für thermische Umwandlung des Beschichtungsmittels und Bilden eines Metalloxids auf der Trägeroberfläche ausreicht, dadurch gekennzeichnet, daß mas ein wasserunlösliches, sehr feines Pulverbeschichtungsmittel durch Verwendung eines chemischen Netzmittels in wässerigem Medium suspendiert und eine wässerige Beschichtungszusammensetzung ausbildet.

3. Verfahren nach Ansprüchen 1 oder 2, dadurch gekennzeichnet, daß das Beschichtungsmittel eine Organometallische Zusammensetzung ist.

4. Verfahren nach Anspruch 3, dadurch gekennzeichnet, daß das Beschichtungsmittel ein Metallacetylacetonat ist.

5. Verfahren nach Anspruch 4, dadurch gekennzeichnet, daß das Metallacetylacetonat eine Mischung aus Kobalt-, Eisen- und Chromacetylacetonaten ist.

6. Verfahren nach jedem der Ansprüche 1 bis 5, dadurch gekennzeichnet, daß die Beschichtungszusammensetzung zusätzlich einen Entschäumer enthält.

7. Verfahren nach Anspruch 6, dadurch gekennzeichnet, daß der Entschäumer eine Zusammensetzung auf Siliconbasis ist.

8. Verfahren nach jedem der Ansprüche 1 bis 7, dadurch gekennzeichnet, daß die Beschichtungszusammensetzung zusätzlich ein mit Wasser mischbares Lösungsmittel zum Erhöhen der Viskosität des wässerigen Mediums enthält.

9. Verfahren nach Anspruch 8, dadurch gekennzeichnet, daß das mit Wasser mischbare Lösungsmittel Glycerin ist.

10. Verfahren nach Anspruch 2, dadurch gekennzeichnet, daß das Netzmittel in der Beschichtungszusammensetzung 1,1,4,4-tetra-alkyl-2-butyn-1,4-diol ist.

11. Verfahren nach Anspruch 2, dadurch gekennzeichnet, daß das Netzmittel in der Beschichtungszusammensetzung eine anionische Laurylsulfat-Verbindung ist.

12. Verfahren nach Anspruch 2, dadurch gekennzeichnet, daß das Netzmittel in der Beschichtungszusammensetzung eine nichtionische Polypropylenoxid-Zusammensetzung ist.

## Revendications

1. Procédé pour le dépôt d'un film d'oxyde métallique sur un substrat de verre, par la mise en contact d'une surface du substrat avec une composition aqueuse de revêtement contenant une substance réactive métallique de revêtement, à une température suffisante pour que la substance réactive de revêtement réagisse thermiquement et forme un oxyde métallique sur la surface du substrat, caractérisé en ce qu'on disperse dans un milieu aqueux une substance réactive de revêtement insoluble dans l'eau par mélange vigoureux et continu, de manière à méttre en suspension physiquement cette substance réactive dans le milieu aqueux et à former une suspension aqueuse, utilisée comme composition de revêtement.

2. Procédé pour le dépôt d'un film d'oxyde métallique sur un substrat de verre, par la mise en contact d'une surface du substrat avec une composition aqueuse de revêtement contenant une substance réactive métallique de revêtement, à une température suffisante pour que la substance réactive de revêtement réagisse thermiquement et forme un oxyde métallique sur la surface du substrat, caractérisé en ce qu'on met en suspension chimiquement dans un milieu aqueux des substances réactives de revêtement en poudre ultra-fine, insolubles dans l'eau, en utilisant un agent mouillant chimique, pour former une suspension aqueuse utilisée comme composition de revêtement.

3. Procédé selon la revendication 1 ou 2, dans lequel la substance réactive de revêtement est une composition organométallique.

4. Procédé selon la revendication 3, dans lequel la substance réactive de revêtement est un acétylacétonate de métal.

5. Procédé selon la revendication 4, dans lequel l'acétylacétonate de métal est un mélange d'acétylacétonates de cobalt, de fer et de chrome.

6. Procédé selon l'une quelconque des revendications 1 à 5, dans lequel la composition de revêtement comprend en outre un agent antimoussant.

7. Procédé selon la revendication 6, dans lequel l'agent antimoussant est une composition à base de silicone.

8. Procédé selon l'une quelconque des revendications 1 à 7, dans lequel la composition de revêtement comprend en outre un solvant miscible à l'eau, afin d'accroître la viscosité du milieu aqueux.

9. Procédé selon la revendication 8, dans lequel le solvant miscible à leau est le glycérol.

10. Procédé selon la revendication 2, dans lequel l'agent mouillant dans la composition de revêtement est le 1,1,4,4-tétra-alkyl-2-butyne-1,4-diol.

11. Procédé selon la revendication 2, dans lequel l'agent mouillant dans la composition de revêtement est un composé de sulfate de lauryle anionique.

12. Procédé selon la revendication 2, dans lequel l'agent mouillant dans la composition de revêtement est une composition d'oxyde de polypropylène non ionique.

Fig. 2